# EUROPEAN PATENT SPECIFICATION

(11) **EP 0 593 427 B1**
(45) Date of publication and mention of the grant of the patent: **11.10.1995**
(21) Application number: 90910635.3
(22) Date of filing: 25.07.1990
(51) Int. Cl.: B29C 51/16, B27N 7/00

(54) **APPARATUS FOR COVERING A SURFACE AND THE EDGES OF A PANEL OF WOODEN OR LIKE MATERIAL WITH A SHEET OF THERMODEFORMABLE MATERIAL**
APPARAT ZUM BESCHICHTEN EINER OBERFLÄCHE UND DER SEITENKANTEN EINER HOLZPLATTE ODER ÄHNLICHEN MATERIALS MIT EINER WÄRMEVERFORMBAREN FOLIE
APPAREIL SERVANT A RECOUVRIR UNE SURFACE ET LES BORDS D'UN PANNEAU EN BOIS OU EN MATERIAU SIMILAIRE AVEC UNE FEUILLE EN MATERIAU THERMODEFORMABLE

(30) Priority: 07.08.1989 IT 8415089
(43) Date of publication of application: 27.04.1994
(73) Proprietor: 3B S.p.A., I-31040 Salgareda Treviso (IT)
(72) Inventor: BERGAMO, Luciano, I-31040 Salgareda (IT)
(74) Representative: Piovesana, Paolo
(86) International application number: EP9001216
(87) International publication number: WO9101872

(56) References cited:
- EP-A- 0 262 748
- EP-A- 0 320 488
- WO-A-88/00880
- BE-A- 627 422
- DE-A- 2 601 118
- DE-C- 2 006 781
- FR-A- 2 482 558
- GB-A- 2 152 861
- US-A- 3 206 800

## Description

This invention relates to an apparatus for covering a surface and the edges of a panel of wooden or like material with a sheet of thermodeformable material.

Wooden, chipboard, MDF and similar panels covered with a plastic laminate sheet are known. They are generally used for constructing furniture and in particular kitchen furniture, in which the exposed surfaces must possess definite aesthetic characteristics combined with resistance to rubbing and to attack by fatty and/or acid vapours. Such panels, which can have their exposed surface smooth or comprising ribs (grooves) even of a certain height (depth) are produced by applying a sheet of thermodeformable plastic material to this surface. The covering operation is completed by applying a further sheet to the opposite surface and strips of plastic covering material along the perimetral edges.

A drawback of these panels is that the joint between the panel surface and edges presents a certain inevitable discontinuity which results both in a ugly separtion line and an incomplete covering and lack of protection of the underlying wooden substrate from the fatty and/or acid vapours normally present in the environments within which the panel is used.

To obviate this drawback it has already been proposed to use a single thermodeformable plastic laminate sheet to simultaneously cover one surface and the edges of the wooden panel. the covering operation uses a press having a rigid surface and a heated surface of elastically yieldable material. The two surfaces can be moved relative to each other so as to press one against the other.

During use, the panel to be covered plus the covering sheet treated with adhesive are placed between the two surfaces. The heat causes softening of said sheet and the pressure causes it to adhere to the flat surface and to the edges of the panel, to create covering continuity between the exposed surface and the edges.

The particular nature of the operations involved ususally require certain precautions to be adopted, these consisting essentially of:
- making sure that the panel is not kept adhering to the rigid surface of the press, but is instead kept separated from it by a spacer consisting essentially of a panel of slightly smaller dimensions than those of the panel to be covered, in order to allow complete and correct adhesion of the plastic material to the panel edges, which would otherwise be only partial if the panel rested on said surface;
- keeping the plastic sheet softened at the four corners of the panel to be covered during the pressing stage, in order to allow it to stretch during pressing instead of just being dragged, which would inevitably cause the laminate to crinkle at the panel corners. In practice this operation is effected by positioning four angular retainers at a short distance in front of the panel vertices to press the softened plastic sheet against the yieldable surface of the press and prevent it being dragged in a tangential direction.

This covering operation is not normally carried out on single panels at time, which would result in very high costs, but instead is carried out on a plurality of panels simultaneously.

For this purpose a so-called "membrane" press is used, (see EP-A3- 0 262 748) comprising an upper fixed platen and a lower mobile bed.

To use this known type of press, at each pressing cycle a sheet of deformable plastic of dimensions compatible with the dimensions of the membrane is firstly placed on said membrane. The panels in a number and arrangement compatible with the dimensions of the panels to be covered are then placed on said sheet together with the angular retainers in a position close to the panel vertices.

Finally a spacer is placed on each panel so that the spacer edges are slightly to the inside of those of the panel.

On operating the press all panels located on it are simultaneously covered, and remain joined together by the fact that the cover sheet is in one piece, they then being removed by a single operation of the press, and fed to the separation and finishing operations.

This covering operation effected simultaneously on several panels has enabled the production rate to be considerably increased, while at the same time using the available equipment more intensely, however certain operational limits have appeared which it is the purpose of this invention to eliminate.

One drawback of this known system is that the positioning of the laminate sheet on the lower bed of the press, the positioning of the panels and retainers on the sheet and the centering of the spacers on the panels must be done manually, resulting in considerable operational slowness and inaccuracy, which can mean a large number of production rejects.

An object of the invention is to obviate this drawback by sustantially increasing the production of panels covered simultaneously on their exposed surface and their four edges.

A further object of the invention is to substantially reduce the personnel required for manually positioning the various elements required for the production cycle within the press.

A further object of the invention is to obtain high quality production, so substantially reducing rejects.

These and further objects which will be more apparent hereinafter are attained according to the invention by an apparatus for covering a surface and the edges of panels of wooden material with a sheet of thermodeformable plastic material as described in claim 1.

A preferred embodiment of the present invention is described in detail hereinafter with reference to the accompaying drawings in which:

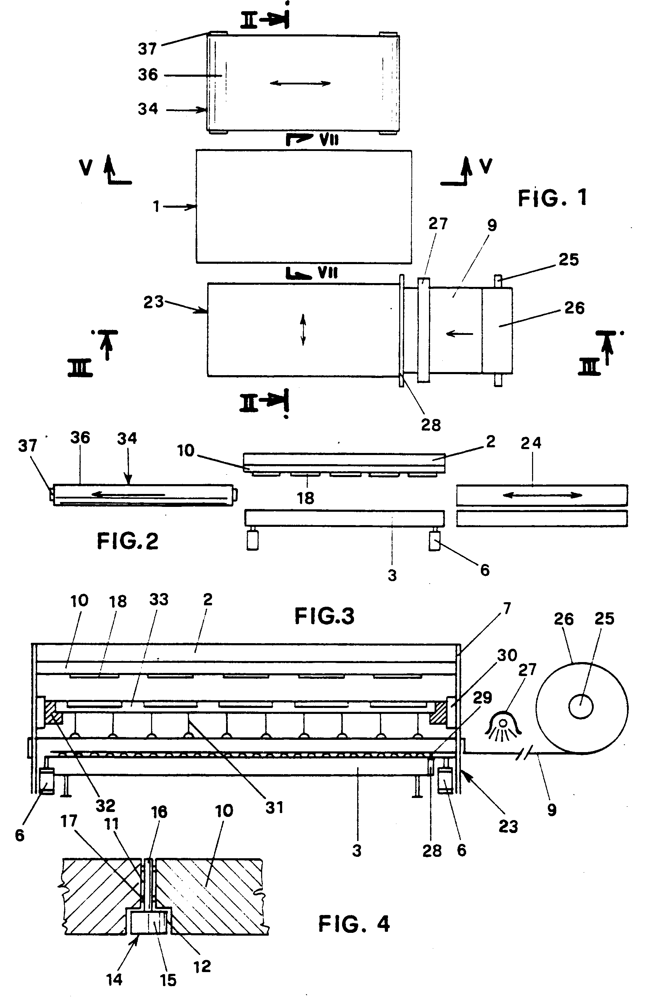

- Figure 1: is a schematic plan view of a membrane press provided with the apparatus of the invention;
- Figure 2: is an enlarged cross-section therethrough on the line II-II of Figure 1 with the press in its open state;
- Figure 3: is an enlarged side view thereof on the line III-III of Figure 1;
- Figure 4: is an enlarged detailed vertical sectional view showing the holes provided in the magnetizable plate;

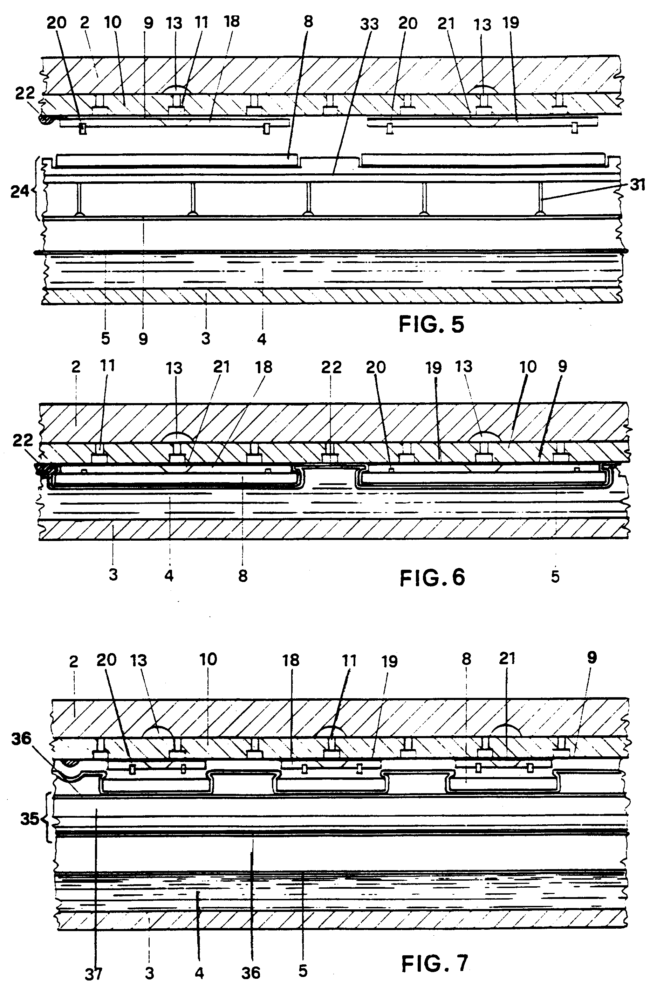

- Figure 5: is an enlarged partial vertical section through the apparatus on the line V-V of Figure 1 during the loading of the panels to be covered, and of the cover sheet;
- Figure 6: is the same view as Figure 5 but during the pressing stage; and
- Figure 7: is an enlarged partial vertical section on the line VII-VII of Figure 1 taken during the extraction of the panels covered by the press.

As can be seen from the figures the apparatus according to the invention can be applied to a traditional membrane press, indicated overall by 1 and comprising a fixed upper platen 2 and a lower tray 3 containing a liquid 4 such as oil or water and closed upperly by a rubber membrane 5. The tray 3, which is provided with a traditional system for heating the liquid, not shown on the drawings for simplicity of representation, is supported by hydraulic cylinder-piston units 6 for its vertical movement alon guide columns 7 between lower position corresponding to the rest position, in which the press 1 is open for introduction of the panels 8 to be covered and the sheets 9 of thermodeformable laminate, and an upper position corresponding to the working position, in which said membrane 5 has been brought close to the upper platen 2 to press thereagainst the interposed panels 8 and laminate sheet 9.

A magnetizable plate 10 is applied to the platen 2. It is construced of ferromagnetic material of low residual magnetization, and is provided internally with particular electrical circuits which make the plate overall magnetic each time electric power is applied, and demagnetized each time power is interrupted. These circuits are not shown on the drawings for reasons of representational simplicity.

The plate 10, having a thickness of a few centimetres, is provided over its entire surface with a plurality of through holes 11, which at their lower end comprise a cylindrical enlargement 12, whereas at their opposite end they communicate with a suction circuit. This can be in the form of a network of channels 13 provided in the surface of said plate 10 in contact with the fixed surface 1 of the press, or within the surface of said platen 2 as shown on the drawings, and connected to a suction pump external to the press 1, but not shown on the drawings.

The holes 11 can be closed by suitable plugs 14 each comprising a cylindrical portion 15 complementary to the cylindrical enlargement 12 of the holes, and a guide shank 16 insertable into these with limited clearance. A pair of O-rings 17 provide a seal between the shank 16 of the plug 14 and the cylindrical wall of the corresponding hole 11.

The apparatus according to the invention also comprises a plurality of spacers 18 of shape corresponding to the shape of the panels to be covered, but having slightly smaller dimensions as in the case of traditional spacers.

Each spacer 18 consists essentially of a wooden panel having securely applied to its upper surface a sheet 19 of ferromagnetic material of low residual magnetization, and on its opposite surface a continuous perimetral gasket 20 provided a short distance from the edge in a suitable grooved seat. Within that portion of the spacer 18 bounded by said gasket there are provided one or more through holes 21, preferably flared upwards, ie towards the side facing the plate 10.

In addition to the spacers 18 the apparatus according to the invention also comprises a plurality of retainers 22 constructed of ferromagnetic material of low residual magnetization. These can be of L or bar shape, according to whether they are to be positioned at an outer surface corner of a spacer 18, or along a side thereof or between two adjacent spacers.

In either case, each retainer comprises a flat portion for resting against the plate 10 and against the corresponding spacer along an edge, plus a portion of greater thickness by which it retains the sheet 9 of thermodeformable material.

The apparatus according to the invention also comprises a feeder for feeding both the panels 8 to be covered and the sheets 9 of thermodeformable plastic laminate for the covering.

This feeder comprises a fixed framework 23 positioned to the side of the press 1, a feed line for the plastic laminate sheets 9 and a feed carriage 24 mobile away from and towards the press 1. The plan dimensions of said carriage 24 substantially correspond to those of said press 1.

In its essential elements, the feed line for the sheets 9 comprises:
- fixed to the framework 23, a pair of supports 25 for a reel 26 of thermodeformable plastic web pretreated with suitable adhesive;
- a radiation heater 27 for removing the curvature from said web before it reaches the feed carriage 24; and
- a transverse web cutter 28 comprising, for example, a chain taut transversely on the unwinding web, and a pair of blades 29 fixed at equidistant points thereon.

The carriage 24 is provided on the prolongation of this feed line and is supported by the framework 23. It consists substantially of a metal frame 30 slidable substantially along guides fixed to the framework 23 and to the press 1, between a position in which it is totally contained within said framework and a position in which it is totally contained within said press 1.

The frame 30 is provided with a plurality of suckers 31 connected to a suction circuit, and is mobile in a vertical direction between a lower position in which it grips a sheet of thermodeformable laminate 9 from the feed line downstream of the cutter 28, and an upper position raised above said feed line.

These vertical movements are obtained by any conventional means, preferably pneumatic or electrical.

The top of the frame of the carriage 24 is provided with supports 32 for a jig 33, consisting essentially of a blockboard panel in which seats are provided for the panels 8 to be covered.

The apparatus according to the invention also comprises an extraction line for the covered panels. In the illustrated embodiment this extraction line comprises a framework 34 situated on the opposite side of the press 1 to the framework 23. As in the case of the framework 23, the framework 34 is also provided with a pair of horizontal guides along which a carriage 35 slides between a position in which it is totally housed within the open press 1, and a position totally outside it.

In the carriage 35 there is mounted a conveyor belt 36, mobile in a direction perpendicular to the direction of movement of the carriage and extending between two end rollers 37.

The operation of the apparatus according to the invention is as follows:
while heating the liquid 4 contained in the lower tray 3 to its working temperature, ensuring a substantial uniformity of heating by using a re-circulation pump of the liquid, the jig 33 corresponding to the panels 8 to be covered is mounted on the carriage 24. A panel 8 is then positioned in each seat of the jig 33, and a spacer 18 is positioned on each panel so that its edges are slightly inwards of the edges of the underlying panel itself.

The retainers 22 are then positioned in the jig 33 in proximity to the outer edge of the outer surface of the spacers 18. The L-shaped retainers are positioned at the outer corner of the four corner spacers, whereas the straight retainers are positioned along the separation strip between adjacent spacers.

Having done this preparatory work, the press is ready to operate. A length of thermoplastic material corresponding to the length of the jig 33 is firstly unwound from the reel 26 and the heater 27 is simultaneously powered, so as to at least approximately straighten it. The cutter 28 is then operated to separate from the material web the sheet 9 which is already lying below the suckers 31.

On termination of this stage a command is fed to cause the suckers 31 to descend onto the sheet 9 and open their connection to the suction circuit, so as to grip the sheet 9 and raise it. The carriage 24 is then advanced until it reaches its position within the press 1. Having reached this, the suction effect of the suckers is interrupted with the result that they allow the sheet 9 to fall onto the membrane 5, after which the jig 33 is raised until each spacer 18 and each retainer 22 adheres to the plate 10.

The surface of the spacers 18 covers a certain number of holes 11 of the magnetic plate 10, and with a plan of this plate it is possible to know beforehand which holes will be covered and which will remain uncovered. On this basis, while setting up the press 1 the operator will have closed with the plugs 14 all the holes 11 with the exclusion of one or more holes internal to each spacer 18 and communicating with the hole 21 provided in it.

Because of this arrangement, if as the jig 33 approaches the plate 10 the magnetization circuits of this latter and the suction system are activated, the spacers 18 and retainers 22 will remain attached to said plate 10 by magnetic effect, whereas the panels will remain adhering to the respective spacers 18 by suction.

After the carriage 24 has been again lowered and has left the press 1, the tray 3 is raised until the membrane 5 presses the by now softened sheet 9 with high pressure against the panels 8 and retainers 22, so implementing the covering operation.

In order to avoid a considerable heating of the plate 10 due to the direct contact with the softened plastic sheet the fixed platen 2 of the press 1 is provided with a plurality of channels for circulating water which cools said plate 10.

During the pressing step, part of the air which has been entrapped between the sheet 9 and the lower surface of panels 8 can come out by means of the same suction circuit which keep adhering the panels 8 to the corresponding spacers 18.

Indeed to ensure a complete elimination of this air on the plate 10 there is provided a second suction circuit which sucks in such an air through the porosity of the panels 8.

On termination of the pressing stage, the tray 3 is made to descend but without interrupting the magnetization effect on the plate 10 or the suction effect on the spacers 18, which in this manner continue to retain the already covered panels 8.

After the descent of the tray 3, the press 1 receives the carriage 35, onto which the panels 8 retained together by the single sheet 9 fall following interruption of the suction on the spacers 18.

Practically it may occur that the membrane 5 can lacerate by wear and also due to the probably break of the laminate sheet 9 during its deformation. In this case, in order to avoid that the liquid 4 , which unavoidably enters the suction channels 13, can damage the vacuum pump, in the suction circuit there are provided filters or like to capture this liquid.

When the carriage 35 has left the press 1, the conveyor belt 36 is operated to transfer the covered panels to the other separation and/or finishing stations, and the system is ready to repeat the operating cycle on a new series of panels 7 which in the meanwhile have been arranged on the feed line.

In this respect, a new sheet of thermodeformable material 9 will have been cut from the web and positioned below the suckers 31 to effect this new cycle. In contrast to the preceding cycle, this only involves attaching the panels 8 to the spacers 18 by suction, these latter reamining magnetically attached to the plate 10 together with the retainers 22.

If the type of panel to be covered is to be changed, the spacers 18 and retainers 22 must firstly be detached from the plate 10, this being done by simply switching off the power to the magnetizing circuits of said plate.

The jig 33 is then replaced by another corresponding to the shape and dimensions of the new panels to be covered, the retooling being done in the manner already described by a very simple operation requiring just a few minutes.

From the aforegoing it is apparent that the apparatus according to the invention has numerous advantages, and in particular:
- for each series of panels it requires only one series of jigs and one series of spacers, of simple construction and low cost;
- it ensures correct positioning of each panel on the respective spacer without requiring any previous adjustment of their rleative prosition;
- it enables very high production rates to be attained with considerable operational precision and a very low percentage of rejects;
- it enables the panel covering cycle to be practically completely automated, with the only exception of the positioning of the panels in the jig 33, an operation however which can be effected by one person without any particular technical knowledge.

## Claims

1. An apparatus for covering a surface and the edges of panels of wooden material with a sheet of thermodeformable plastic material, of the type for application to a press with a lower heated bed of elastically yieldable material and a rigid upper platen, the distance of which from the lower bed is variable between a maximum value which enables the insertion of a sheet of thermodeformable material, panels, retainers and spacers, and a minimum value at which the pressing stage is effected, characterised by comprising:
- an electromagnetizable plate (10) to be securely fixed to the upper platen (2) of the press (1) and comprising holes connected to a suction network (13);
- a plurality of spacers (18) provided with at least one portion (19) of ferromagnetic material construction and magnetically attached to said plate (10) when this is magnetized, each spacer (18) comprising at least one hole (21) which when said spacer is attached to said plate (10) communicates with at least one hole (11) provided therein, and seal means (20) surrounding said hole (21);
- a plurality of retainers (22) provided with at least one ferromagnetic material portion and attachable to said plate (10), as in the case of said spacers (18);
- a conveyor (24) for conveying thermodeformable plastic laminate sheets (9) from a position outside said press (1) to a position within it, said conveyor (24) being provided with means (31) for picking up and discharging said sheets (9);
- a jig (33) for positioning a plurality of panels (8) to be covered and provided with seats for these latter in positions corresponding with said spacers (18) on said plate (10); and
- means (24) for transferring said positioning jig (33) from the outside to the inside of the press (1) and for raising it when inside the press, in order to bring the panels (8), located in their respective seats, into contact with the corresponding spacers (18).

2. An apparatus as claimed in claim 1, characterised in that the plate (10) is constructed of ferromagnetic material of low residual magnetization and internally incorporates electrical magnetization circuits.

3. An apparatus as claimed in claim 1, characterised in that the plate (10) comprises substantially over its whole surface a plurality of holes (11) associated with means (14) for their temporary sealed closure.

4. An apparatus as claimed in claim 3, characterised in that each hole (11) lowerly comprises a cylindrical enlargement (12) and is associated with a plug (14) comprising a lower cylindrical head (15) housable in said cylindrical enlargement (12) and a shank (16) provided with at least one gasket (17) which forms a seal against the cylindrical wall of said hole (11).

5. An apparatus as claimed in claim 4, characterised in that when each hole (11) is in its closed state, the lower surface of the head (15) of the corresponding plug (14) is coplanar with the lower surface of said magnetizable plate (10).

6. An apparatus as claimed in claim 1, characterised in that each spacer (18) consists of a wooden panel, to the upper surface of which a plate (19) of ferromagnetic material is applied.

7. An apparatus as claimed in claim 1, characterised in that each hole (21) provided in tha spacers (18) is flared upwards.

8. An apparatus as claimed in claim 1, characterised in that the seal means surrounding said holes (21) consist of a continuous perimetral gasket (20) partially projecting from the lower surface of the corresponding spacer (18).

9. An apparatus as claimed in claim 1, characterised in that each retainer (22) is constructed entirely of ferromagnetic material.

10. An apparatus as claimed in claim 1, characterised in that each retainer (22) comprises a strip-like portion which adheres with its upper surface to the plate (10) and adheres with one edge to the corresponding space (18), and a portion of greater thickness for retaining the sheet (9) of thermodeformable material against the lower bed during the pressing stage.

11. An apparatus as claimed in claim 1, characterised in that there are associated with the conveyor (19) an unwinder for unwinding said sheets (9) from a reel (26) and a cutter (28) for separating the sheet (9) from the web unwound from said reel.

12. An apparatus as claimed in claim 1, characterised in that a heater (27) is interposed between the reel (26) and the cutter (28) to remove curvature from the web unwound from said reel.

13. An apparatus as claimed in claim 11, characterised in that the cutter (28) consists substantialy of an endless chain extending tautly transversely to the web of thermodeformable material unwound from said reel (26), and at least one blade (29) applied to said chain.

14. An apparatus as claimed in claim 1, characterised by comprising a framework (23) to the side of the press (1) and a carriage (24) mobile between a position within and a postion outside said press (1), said carriage being provided lowerly with a plurality of suckers (31) connected to a suction network for picking up and transferring each sheet (9) from the framework (23) to the lower bed (3) of the press, and a plurality of supports (32) for said jig (33).

15. An apparatus as claimed in claim 14, characterised in that members for vertically moving said suckers (31) and said supports (32) are associated with the carriage (24).

16. An apparatus as claimed in claim 1, characterised by comprising a member (35) for extracting from the press (1) the panels (8) covered with the sheet (9) on termination of the covering stage.

17. An apparatus as claimed in claim 16, characterised in that the extractor member comprises a framework (34) located to the side of the press (1) and a carriage (35) mobile between a position outside and a position within the press and provided with a conveyor belt (36) for transferring the total covered panels (8) to the subsequent working stages.

## Patentansprüche

1. Apparat zum Beschichten einer Oberfläche und der Kanten von Platten aus Holzmaterial mit einer Folie aus wärmeverformbaren Kunststoffmaterial des Typs zur Verwendung bei einer Presse mit einem unteren erwärmten Bett aus elastisch nachgiebigem Material und einer starren oberen Platte, deren Abstand von dem unteren Bett zwischen einem maximalen Wert, bei dem die Einführung einer Folie aus wärmeverformbarem Material, von Platten, Haltevorrichtungen und Abstandshaltern möglich ist, und einem minimalen Wert, bei dem die Preßstufe durchgeführt wird, variierbar ist, gekennzeichnet durch
- eine elektromagnetisierbare Platte (10), welche fest an der oberen Platte (2) der Presse (1) fixierbar ist und Löcher umfaßt, die an ein Saugnetz (13) angeschlossen sind;
- eine Vielzahl von Abstandshaltern (18), welche mit wenigstens einem Abschnitt (19) aus einem ferromagnetischen Materialaufbau versehen sind und die magnetisch mit der besagten Platte (10) verbunden sind, wenn diese magnetisiert ist, wobei jeder Abstandshalter (18) wenigstens ein Loch (21) umfaßt, welches, wenn der besagte Abstandshalter mit der besagten Platte (10) verbunden ist, mit wenigstens einem darin vorgesehenen Loch (11) kommuniziert, sowie eine Dichtungsvorrichtung (20), welche das besagte Loch (21) umgibt;
- eine Vielzahl von Haltevorrichtungen (22), welche mit wenigstens einem ferromagnetischen Materialabschnitt versehen und mit der besagten Platte (10) wie die besagten Abstandshalter (18) verbindbar ist;
- ein Fördermittel (24) zum Fördern von wärmeverformbaren Kunststofflaminatfolien (9) von einer Position außerhalb der besagten Presse (1) zu einer Position in ihr, wobei die besagten Fördermittel (24) mit einer Vorrichtung (31) zum Aufnehmen und zum Abgeben der besagten Folien (9) versehen sind;
- eine Aufnahmevorrichtung (33) zur Positionierung einer Vielzahl zu beschichtender Platten (8), welche mit Aufnahmen für letztere in Positionen, welche den besagten Abstandshaltern (18) an der besagten Platte (10) entsprechen, versehen sind; und
- eine Vorrichtung (24) zum Transport der besagten Positionierungsaufnahmevorrichtung (33) von außen zu dem Inneren der Presse (1) und um dieselbe hochzufahren, wenn sie sich in der Presse befindet, um die Platten (8), die sich an den jeweiligen Sitzen befinden, in Kontakt mit den entsprechenden Abstandshaltern (18) zu bringen.

2. Apparat nach Anspruch 1, dadurch gekennzeichnet, daß die Platte (10) aus einem ferromagnetischen Material mit niedriger Restmagnetisierung und intern eingebauten elektrischen Magnetisierungskreisen gebaut ist.

3. Apparat nach Anspruch 1, dadurch gekennzeichnet, daß die Platte (10) im wesentlichen über ihre gesamte Oberfläche eine Vielzahl von Löchern (11) umfaßt, welche mit Mitteln (14) zu ihrem vorübergehenden dichten Verschluß verbunden sind.

4. Apparat nach Anspruch 3, dadurch gekennzeichnet, daß jedes Loch (11) unten eine zylindrische Erweiterung (12) aufweist und mit einem Stopfen (14) versehen ist, welcher einen unteren zylindrischen Kopf (15) umfaßt, der in der besagten zylindrischen Erweiterung (12) aufnehmbar ist, sowie mit einem Schaft (16), der mit wenigstens einer Dichtung (17) versehen ist, welche eine Dichtung gegenüber der zylindrischen Wandung des besagten Lochs (11) bildet.

5. Apparat nach Anspruch 4, dadurch gekennzeichnet, daß, wenn jedes Loch (11) sich in seinem verschlossenen Zustand befindet, die untere Oberfläche des Kopfes (15) des entsprechenden Stopfens (14) koplanar mit der unteren Oberfläche der besagten magnetisierbaren Platte (10) ist.

6. Apparat nach Anspruch 1, dadurch gekennzeichnet, daß jeder Abstandshalter (18) aus einer Holzplatte besteht, an deren oberer Oberfläche eine Platte (19) aus ferromagnetischem Material angebracht ist.

7. Apparat nach Anspruch 1, dadurch gekennzeichnet, daß jedes Loch (24), das mit den Abstandshaltern (18) versehen ist, sich nach oben erweitert.

8. Apparat nach Anspruch 1, dadurch gekennzeichnet, daß die Dichtung, welche die besagten Löcher (21) umgibt, aus einer kontinuierlichen Umfangsdichtung (20) besteht, welche teilweise von der unteren Oberfläche des entsprechenden Abstandshalters (18) wegsteht.

9. Apparat nach Anspruch 1, dadurch gekennzeichnet, daß jede Haltevorrichtung (22) vollständig aus ferromagnetischem Material gebaut ist.

10. Apparat nach Anspruch 1, dadurch gekennzeichnet, daß jede Haltevorrichtung (22) einen streifenförmigen Abschnitt umfaßt, welcher mit seiner oberen Oberfläche an der Platte (10) haftet und mit einer Kante an dem entsprechenden Abstandshalter (18) haftet, sowie einen Abschnitt größerer Dichte zum Halten der Folie (9) aus wärmeverformbarem Material gegen das untere Bett während der Preßstufe.

11. Apparat nach Anspruch 1, dadurch gekennzeichnet, daß den Fördermitteln (19) ein Abwickler zum Abwickeln der besagten Folien (9) von einer Spule (26) über eine Schneidvorrichtung (28) zum Abtrennen der Folie (9) von der von der besagten Spule abgewickelten Bahn zugeordnet ist.

12. Apparat nach Anspruch 1, dadurch gekennzeichnet, daß eine Heizeinrichtung (27) zwischen der Spule (26) und der Schneidvorrichtung (28) angeordnet ist, um eine Wölbung von der Bahn, welche von der besagten Spule abgewickelt wird, zu entfernen.

13. Apparat nach Anspruch 11, dadurch gekennzeichnet, daß die Schneidvorrichtung (28) im wesentlichen aus einer endlosen Kette besteht, die sich straff quer zu der Bahn aus wärmeverformbarem Material erstreckt, welche von dem von der besagten Spule (26) abgewickelt wird, sowie im wesentlichen aus einem an der besagten Kette angebrachten Messer (29).

14. Apparat nach Anspruch 1, dadurch gekennzeichnet, daß er einen Rahmen (23) auf der Seite der Presse (1) und einen Schlitten (24) umfaßt, der zwischen einer Position innerhalb und einer Position außerhalb der besagten Presse (1) bewegbar ist, wobei der Schlitten unten mit einer Vielzahl von Saugern (31) versehen ist, die an ein Saugnetz angeschlossen sind, um jede Folie (9) aufzunehmen und von dem Rahmen (23) zu dem unteren Bett (3) der Presse zu transportieren, sowie eine Vielzahl von Trägern (32) für die besagte Positioniervorrichtung (33).

15. Apparat nach Anspruch 14, dadurch gekennzeichnet, daß Glieder zum senkrechten Bewegen der besagten Sauger (31) und der besagten Träger (32) dem Schlitten (24) zugeordnet sind.

16. Apparat nach Anspruch 1, dadurch gekennzeichnet, daß er ein Glied (35) zur Entnahme der mit der Folie (9) beschichteten Platten (8) nach Beendigung der Beschichtungsstufe aus der Presse (1) umfaßt.

17. Apparat nach Anspruch 16, dadurch gekennzeichnet, daß das Entnahmeglied einen Rahmen (34) umfaßt, welcher auf der Seite der Presse (1) angeordnet ist, sowie einen Schlitten (35), der zwischen einer Position außerhalb und einer Position innerhalb der Presse bewegbar ist und mit einem Förderband (36) zum Transport der total beschichteten Platten (8) zu den nachfolgenden Bearbeitungsstufen versehen ist.

## Revendications

1. Appareil servant à recouvrir une surface et les bords d'un panneau en bois par une feuille de matière plastique thermodéformable, du type s'utilisant sur une presse présentant un lit inférieur chauffé en un matériau élastiquement déformable et un plateau supérieur rigide, dont la distance au lit inférieur peut être modifiée entre une valeur maximale qui permet l'insertion d'une feuille de matériau thermodéformable, de panneaux, d'arrêts et d'écarteurs, et une valeur minimale à laquelle s'effectue l'étape de pressage, caractérisé en ce qu'il comporte:
- un plateau (10) électromagnétisable à fixer sur le plateau supérieur (2) de la presse (1), et comportant des trous reliés à un réseau de succion (13);
- plusieurs écarteurs (18) prévus avec au moins une partie (19) construite en matériau ferromagnétique et magnétiquement attachée audit plateau (10) lorsque celui-ci est magnétisé, chaque écarteur (18) comportant au moins un trou (21) qui, lorsque ledit écarteur est attaché audit plateau (10), communique avec au moins un trou (11) prévu dans ce dernier, et des moyens d'étanchéité (20) entourant ledit trou (21);
- plusieurs arrêts (22) prévus avec au moins une partie en matériau ferromagnétique, et pouvant être attachés audit plateau (10) comme dans le cas desdits écarteurs (18);
- un transporteur (24) pour transférer des feuilles de lamifié en plastique thermodéformable (9) depuis une position située à l'extérieur de ladite presse (1) jusqu'à une position située à l'intérieur de celle-ci, ledit transporteur (24) étant doté de moyens (31) pour saisir et décharger lesdites feuilles (9);
- un appui (33) pour positionner plusieurs panneaux (8) à recouvrir et doté de logements pour ces derniers, dans des positions correspondant auxdits écarteurs (18) dudit plateau (10); et
- des moyens (24) pour transférer ledit appui de positionnement (33) depuis l'extérieur jusqu'à l'intérieur de la presse (1), et pour le relever lorsqu'il se trouve à l'intérieur de la presse, pour amener les panneaux (8) placés dans leur logement respectif en contact avec les écarteurs correspondants (18).

2. Appareil selon la revendication 1, caractérisé en ce que le plateau (10) est construit en un matériau ferromagnétique de faible magnétisation résiduelle, et qu'il comporte à l'intérieur des circuits électriques de magnétisation.

3. Appareil selon la revendication 1, caractérisé en ce que le plateau (10) comporte, essentiellement sur la totalité de sa surface, plusieurs trous (11) associés à des moyens (14) en vue de leur fermeture hermétique temporaire.

4. Appareil selon la revendication 3, caractérisé en ce que chaque trou (11) comprend dans le bas un élargissement cylindrique (12) et est associé à un bouchon (14) comportant une tête cylindrique inférieure (15) pouvant être logée dans ledit élargissement cylindrique (12), et une tige (16) dotée d'au moins un joint (17) qui forme un joint d'étanchéité contre la paroi cylindrique dudit trou (11).

5. Appareil selon la revendication 4, caractérisé en ce que lorsque chaque trou (11) est dans son état fermé, la surface inférieure de la tête (15) du bouchon correspondant (14) est coplanaire avec la surface inférieure dudit plateau magnétisable (10).

6. Appareil selon la revendication 1, caractérisé en ce que chaque écarteur (18) est constitué d'un panneau en bois, sur la surface supérieure duquel un plateau (19) en matériau ferromagnétique est installé.

7. Appareil selon la revendication 1, caractérisé en ce que chaque trou (21) prévu dans les écarteurs (18) s'élargit vers le haut.

8. Appareil selon la revendication 1, caractérisé en ce que les moyens d'étanchéité entourant lesdits trous (21) sont constitués d'un joint périphérique continu (20) débordant partiellement de la surface inférieure de l'écarteur correspondant (18).

9. Appareil selon la revendication 1, caractérisé en ce que chaque arrêt (22) est construit entièrement en matériau ferromagnétique.

10. Appareil selon la revendication 1, caractérisé en ce que chaque arrêt (22) comporte une partie en forme de bande qui adhère par sa surface supérieure au plateau (10) et qui adhère par un bord à l'écarteur correspondant (18), et une partie de plus grande épaisseur pour retenir la feuille (9) en matériau thermodéformable contre le lit inférieur au cours de l'opération de pressage.

11. Appareil selon la revendication 1, caractérisé en ce qu'au convoyeur (19) sont associés un dérouleur, pour dérouler lesdites feuilles (9) d'une bobine (26), et un couteau (28) pour séparer la feuille (9) de la feuille déroulée de ladite bobine.

12. Appareil selon la revendication 1, caractérisé en ce qu'un réchauffeur (27) est intercalé entre la bobine (26) et le couteau (28), pour supprimer la courbure de la feuille déroulée de ladite bobine.

13. Appareil selon la revendication 11, caractérisé en ce que le couteau (28) est essentiellement constitué d'une chaîne sans fin tendue transversalement par rapport à la feuille de matériau déformable déroulée de ladite bobine (26), et d'au moins une lame (29) installée sur ladite chaîne.

14. Appareil selon la revendication 1, caractérisé en ce qu'il comporte un châssis (23) sur le côté de la presse (1) et un chariot (24) pouvant se déplacer entre une position située à l'intérieur et une position située à l'extérieur de ladite presse (1), ledit chariot étant doté dans le bas de plusieurs ventouses (31) reliées à un réseau de succion, pour saisir et transférer chaque feuille (9) depuis le châssis (23) jusque sur le lit inférieur (3) de la presse, et plusieurs supports (32) pour ledit appui (33).

15. Appareil selon la revendication 14, caractérisé en ce qu'en vue de déplacer verticalement lesdites ventouses (31) et lesdits supports (32) des organes sont associés au chariot (24).

16. Appareil selon la revendication 1, caractérisé en ce qu'il comporte un organe (35) pour extraire de la presse (1) les panneaux (8) recouverts de la feuille (9) lorsque l'opération de recouvrement est terminée.

17. Appareil selon la revendication 16, caractérisé en ce que l'organe d'extraction comporte un châssis (34) situé sur le côté de la presse (1) et un chariot (35) pouvant être déplacé depuis une position située à l'extérieur jusque dans une position située à l'intérieur de la presse, et doté d'une bande transporteuse (36), pour transférer la totalité des panneaux recouverts (8) vers les étapes de travail ultérieures.
